# EUROPEAN PATENT APPLICATION

(11) **EP 1 138 376 A2**
(43) Date of publication of application: **04.10.2001**
(21) Application number: 01303049.9
(22) Date of filing: 30.03.2001
(51) Int. Cl.: B01J 8/00

(54) **Particulate handling**

(30) Priority: 31.03.2000 GB 0007846
(71) Applicant: Catalyst Handling Research & Engineering Limited, Bridgend CF31 3RD (GB)
(72) Inventor: Sheehan, Patrick, Brackla, Bridgend (GB)
(74) Representative: Cawdell, Karen Teresa

(57) **Abstract**

A particulate handling system which is suitable for the transfer of kinetic energy from particles of transported particulate material and which lessens the damage suffered by said particulate material by the removal of that kinetic energy.

## Description

This invention relates to improvements in or relating to particulate handling apparatus, and especially but not exclusively to apparatus suitable for handling the of particulates which have, during transportation to the apparatus, been imparted with a high kinetic energy. Hereafter "pellet" will be used to describe particulates in general.

It is well known that pellets can be conveyed pneumatically using a gas to entrain the solids. Such pneumatic conveyance systems are used to transfer pellets between containers, for example from chemical reactors into drums or vice versa. When the pellets are a catalyst the transfer of pellets may be to load a reactor vessel, or unload a reactor vessel to allow treatment of the catalyst or rebedding of the catalyst.

A primary objective for a pneumatic conveying system is to convey the pellets at the highest possible rate. To do this, the entrained pellet gas mixture is forced through piping, conduits or ducting at the highest possible velocity. A problem, however, with such an approach is that the higher the velocity of transportation of the pellets, the greater the kinetic energy each pellet acquires. When the pellet and entrainment gas mixture reaches the location where the pellets are to be discharged, for instance into a drum or a reactor, the entrainment gas is separated from the pellets and the pellets moved to their desired position.

Once the entrainment gas has been separated from the pellets, the kinetic energy possessed by the pellets needs to be transferred from the pellets. In previously known particulate handling apparatus, and in particular, catalyst pellet handling apparatus, this transfer has been via friction with a gas whilst the pellet is in motion through said gas within a loading hopper and/or by impacting a surface of the loading hopper. This method of transfer of kinetic energy from the pellets is only suitable for pellets where the impact force experienced by the pellets is not sufficiently great to physically damage the pellets. It has been found that large pellets, for example 3 - 16 mm in their greatest dimension, or particularly dense pellets gain sufficient kinetic energy during transportation that the current methods of reducing the kinetic energy in the pellets is insufficient. This has the result that when the pellets impact a surface of the loading hopper, cracking or fragmentation of the pellets occurs. This is clearly undesirable as it greatly shortens the life of the pellets and where the pellets are catalysts, lessens the efficiency of the catalyst when it is working.

According to the present invention there is provided a particulate handling system which is suitable for the transfer of kinetic energy from particles of transported particulate material and which lessens the damage suffered by said particulate material by the removal of that kinetic energy.

According to the present invention there is provided a particulate material handling apparatus which includes separation means for separating conveyed particulate from a conveying gas, at least one energy reducing means for reducing the kinetic energy of said particulate, and a loading hopper, in which said means are so arranged relative to each other that when in use particulate passes through the separation means, the kinetic energy reduction means and into the loading hopper.

In a preferred embodiment of the present invention the separation means is comprised of a first chamber having an inlet port, and first and second outlet ports, in which particulate may exit the first chamber via the first outlet port, and the conveying gas may be exhausted via the second outlet port. The first chamber is configured so that combined conveying gas and particulate enters through the inlet port, and the inertia of the particulate carries the particulate towards the first outlet port.

Therefore, according to a further aspect of the present invention, there is provided separation means for separating conveyed particulate material from a conveying gas, which means includes a first chamber having an inlet port arranged to receive the conveyed gas and particulate material and first and second outlet ports, in which particulate may exit the first chamber via the first outlet port and the conveying gas is exhausted via the second outlet port.

The first chamber is preferably of greater cross sectional volume than the inlet port and, thus after entry via the inlet port the conveying gas slows down and drops the particulate which continues, because of inertia, to travel toward and out of the outlet port.

In a particularly preferred embodiment of the present invention the conveying gas is induced to exhaust from the first chamber via the second outlet port by way of a means causing the second outlet port to be at reduced pressure relative to the first chamber. This causes the conveying gas to exit the first chamber.

A preferred kinetic energy reducing means according to the present invention may be comprised of a second chamber having an inlet and an outlet port between which is at least one flexible baffle. Each baffle is so located in the second chamber that pellets impact upon the baffle when passing between the inlet port and outlet port. It is most preferred that the baffles are made from a flexible material that is so configured that each baffle is capable of absorbing energy when impacted by a pellet, but which does not absorb all of the kinetic energy of the pellet. Such materials may be of any flexible material including soft plastics, or most preferably, of natural or artificial rubber.

Therefore, according to yet a further aspect of the present invention, there is provided Kinetic energy reduction means for reducing kinetic energy of particulate material which means includes a chamber having an inlet port area and an outlet port having arranged therebetween at least one flexible baffle arranged such that the material impacts upon the baffle when passing from the inlet port to the outlet port.

In a particularly preferred embodiment of the present invention each baffle is comprised of a plurality of strips of sheet rubber. One end of each strip of sheet rubber being attached to a wall of the second chamber and the other end of each strip of sheet rubber being free. The thickness of the sheet rubber employed and the number of strips that comprise the baffle are dependent upon the expected kinetic energy of the particulate material. The desired thickness and number of strips may either be determined empirically or theoretically.

In a further embodiment of the present invention the chamber is adapted to allow the rapid attachment and detachment of baffles to one wall of said second chamber; this allows empirical determination of the optimal number of strips and optimal thickness of each strip. The means for attachment may include standard fixing means or slots through the wall of the second chamber.

In an alternative embodiment of the aforementioned embodiment, the second chamber may be formed from a portion of pipe or ducting with the strips being attached either to an internal wall of said pipe or ducting or being inserted into said pipe or ducting via slots through said wall. The wall may be provided with a large number of slots which can either be used to anchor a strip of kinetic energy absorbing material or may be blanked off when not in use.

Therefore, according to yet a further aspect of the present invention, there is provided kinetic energy reduction means for reducing kinetic energy of particulate material which means includes an inlet pipe or duct support means arranged to support a pipe or duct having a flexible portion.

A second kinetic energy reduction means according to the present invention includes an inlet pipe or duct support means and a hinged flexible pipe or duct section located between the separation means and the loading hopper.

In this embodiment the inlet pipe or duct support means supports the inlet pipe or duct at or substantially adjacent to the separation means, and is provided with means to allow the disposition of the major axis of the pipe or duct between the separation means and the hinged flexible pipe or duct section to be adjusted with respect to the horizontal. Adjustment of the disposition of that pipe or duct with respect to the horizontal may cause the particulate to either have to flow uphill, horizontally, or downhill to the hinged flexible pipe section. The nature and degree of the slope that the pellets have to flow along are features that affect the amount of kinetic energy the particulate loses whilst travelling between the separation means and the flexible pipe or duct.

The pipe or duct between the separation means and the hinged flexible pipe section may be of a standard material used in the construction of catalyst handling equipment such as steel, or may be internally coated with an energy absorbing material such as a soft plastics or a natural or artificial rubber. Furthermore, the internal surface of said pipe may be substantially smooth or may be contoured to alter the energy absorbing characteristics of said surface.

In an alternative embodiment of the present invention, the pipe or duct may be so constructed that the distance between the separation means and the hinged flexible portion may be varied. This again affects the amount of kinetic energy absorbed from the particulate flowing through the pipe or duct.

The hopper of the present invention is designed and configured to try to minimise the force of impacts experienced by particulate material entering the hopper and thus impacting on its walls. This is at least partially achieved by causing the entry angle of the particulate material into the hopper to be such that when the particulate material first impacts a wall of the hopper it does so at an acute angle to the surface of the hopper. The particulate material is thus not subjected to a sudden deceleration, rather it is subject to one or more small decelerations. Furthermore, the force of the impact may be lessened by making the inner surface of the hopper from an energy absorbing material such as a soft plastic, or an artificial or natural rubber. The surface may be smooth or may be contoured to alter the energy absorbance characteristics of the surface.

In a particularly preferred embodiment of the present invention the loading hopper is substantially circular in horizontal cross section (when in use) and the pellets introduced into the hopper substantially tangentially (at the point of introduction) to the inside surface of the hopper. Most preferably, the hopper has an internal shape that is substantially conical with the cone narrowing towards the bottom of the hopper when in use. The hopper is provided with an outlet port which is substantially at the apex of the cone.

In a particularly preferred embodiment of the previous embodiment, the hopper is further provided with a cylindrical section, one end of which mouths onto and engages with the widest portion of the conical section and the other end of which is closed. The closed end may be provided with a vision panel. The hopper is further provided with a mounting flange adapted to engage with a manway on a reactor vessel or a drum for conveying the particulate material.

It is particularly noted that although the preferred embodiment of the hopper may bear the appearance of a cyclonic air flow type separator, in the apparatus of the present invention the pellets enter the hopper with some, but not very much, gas and, because of the kinetic energy reduction means that the pellets have already passed through, they enter relatively slowly. As such, no cyclonic type separation occurs. Indeed, in a particularly preferred embodiment of the present invention there is no gas flowing through the hopper at all.

The present invention is also concerned with a method of transferring kinetic energy from particulate material. The method typically includes permitting particulate material to pass through the apparatus according to the first aspect of the present invention.

Preferably, the first chamber is configured so that combined conveying gas and particulate enters through the inlet port, and the inertia of the particulate carries the particulate towards the first outlet port.

The present invention will be further described and explained by way of example and with reference to the accompanying drawings in which:
Figure 1 represents a reactor having an embodiment of the present invention mounted thereon;
Figure 2 represents an embodiment of the apparatus of the present invention as shown in Figure 1;
Figure 3 shows an enlarged view of the separation means of the apparatus of Figure 2; and
Figure 4 shows, schematically, a portion of the tube of the apparatus of Figure 2 with its major axis adjusted into three different dispositions, (a), (b) and (c) with respect to the horizontal.

With reference to the Figures, the apparatus of the illustrated embodiment of the present invention is intended for use in connection with particulate in the form of pellets of diameter between 3 and 16 mm that enter the apparatus illustrated at high velocities, and as such with high kinetic energies.

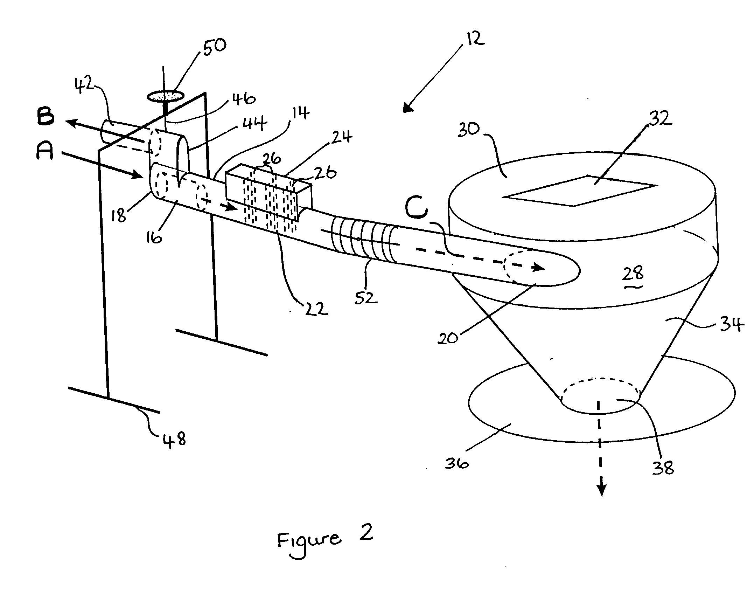

The apparatus comprises a separation chamber means (12) comprising a tube (14) within which is located a smaller dimensioned tube (16). Tube (16) forms an inlet (18) to the separation chamber through which pellets (not shown) entrained in a high velocity stream of pneumatic carrier gas (as shown by arrow A in Figures 2, 3 and 4) may be delivered into the separation chamber. An end portion of tube (14) distal from tube (16)provides a first outlet (20) through which pellets may exit tube (14).

A first kinetic energy reduction means is formed by baffle means (22) and is located in chamber (24) situated between inlet (18) and first outlet (20) of the tube in such a way as to be impacted by pellets flowing along the tube. The baffle means (22) comprises a number of rubber strips (26) suspended from the top of the chamber (24) of the tube. The rubber strips are arranged in three rows placed across the direction of flow of the pellets and a pellet would impact the rows of strips one after another.

The outlet (20) mouths through the surface of a cylindrical portion (28) of a hopper (30). The orientation of tube (14) relative to the hopper (30) is such that in use pellets exiting from outlet (20) do so tangentially to the inner surface of the cylindrical portion (28) of the hopper (at the position of mouthing of outlet (20)). The upper surface of hopper (30) is closed and provided with a glass inspection window (32). A lower, conical portion (34) of the hopper (30) is provided with an exit orifice (38), and on the outer surface of the hopper, a flange (36). Flange (36) is fitted with an airtight seal and is adapted to be flanged to a top manway flange of a reactor vessel. Exit orifice (38) of the hopper allows pellets entering into the hopper to exit the hopper and be delivered to their final desired position in the reactor vessel via known means such as a loading sock.

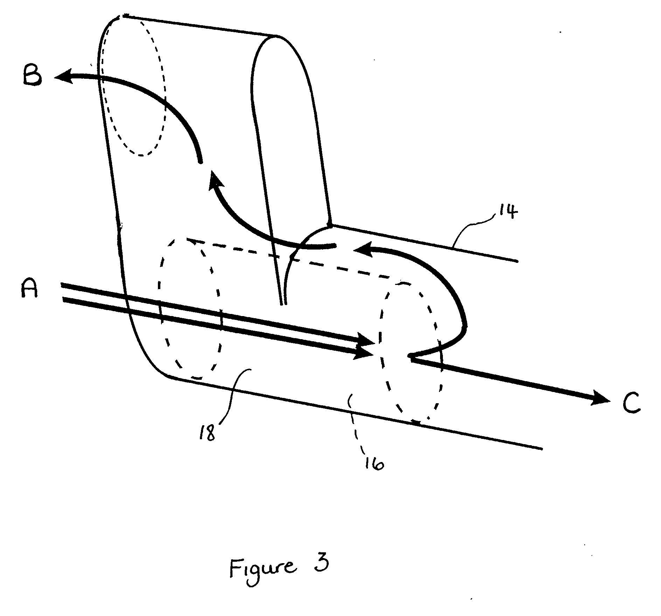

The tube (16) is mounted within and secured to a lower internal surface of the tube (14). Adjacent tube (14) and located above it, an outlet tube (42) is secured to the tube (14) with the major axis of the tubes being parallel to each other. Outlet tube (42) mouths into the separation means via an outlet (44). Outlet tube (42) is in communication with means (not shown) that causes the pneumatic carrier gas to be drawn through tube (42) so exhausting said gas from the separation means. The gas flows in the direction of arrow B (Figures 2 and 3). As may be seen from Figures 2 and 3 and the arrow B, the outlet (44) is located adjacent the inlet (18) to the separation means so as to cause the exhaust pneumatic carrier gas to be vented in a direction opposite to that which it enters the separation means. This has the effect of minimising the amount of particulate material exiting the separation means via outlet (44).

The illustrated apparatus is also provided with a second kinetic energy reduction means. In said second kinetic energy reduction means, tubes (14) and (42) are suspended via a threaded rod (46) from a support frame (48).

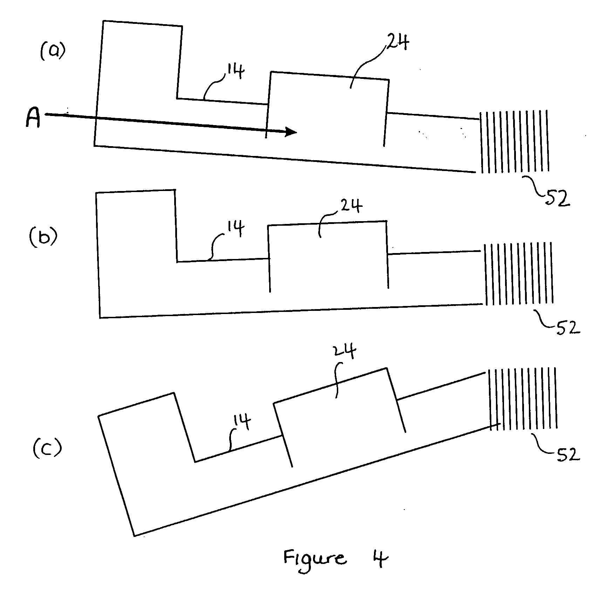

An internally threaded handwheel (50) is mounted on the threaded rod (46) and serves to enable adjustment of the disposition of the major axis of the tube (14) with respect to the horizontal by moving the tubes (14) and (42) up and down relative to the support frame (48). In order to accommodate such movement, a hinged flexible pipe section (52) is provided intermediate the separation means (12) and the first outlet (20). This arrangement enables the inclination of the tube (14) to the horizontal to be adjusted. Examples of possible inclinations are shown in Figure 4. As may be seen in Figure 4, the angle of incline of the tube (14) may either provide the tube (14) with a downhill slope (downhill being defined by the direction of travel of the pellets indicated by arrow A) as shown in Figure 4(a), a flat surface as shown in Figure 4(b), and an uphill slope as shown in Figure 4(c). The kinetic energy lost by pellets passing along the tube (14) increases from Figures 4(a) to 4(b) to 4(c).

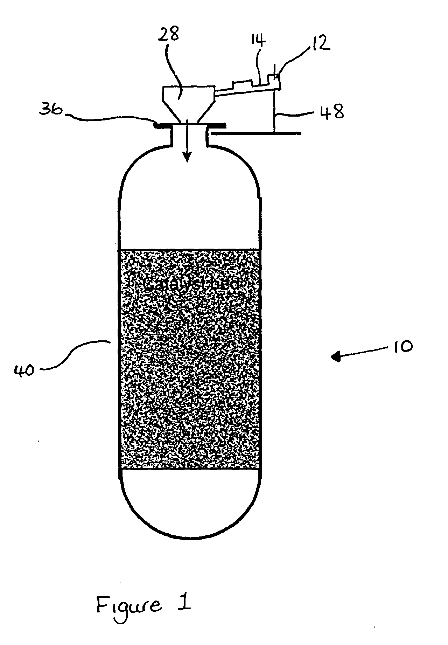

The embodiment of the apparatus of the present invention as illustrated in Figures 1 - 4 may be used as follows.

The hopper (30) is sealingly secured to the upper manway of a reactor vessel (40)via flange (36). The reactor vessel (40) is completely sealed off from any process gas by blinding or turning off any inlet or outlet process valves to the reactor. In this way, both the reactor and the catalyst handling system of the present invention are sealed off from external atmosphere, thus allowing both the apparatus and the reactor to be placed under negative pressure. By this means, the need for an airlock at the base of the hopper (28) is eliminated. This allows continuous loading of the catalyst bed in the reactor and reduces the build-up of catalyst pellets in the hopper (28).

A stream of pellets of diameter between 3 and 16 mm and of higher or lower densities as desired is delivered entrained in a high velocity stream of pneumatic carrier gas through ducting and via the smaller diameter tube (16) into the separation means (12). As the pneumatic carrier gas enters the larger volume of tube (14) it drops the pellets suspended in it, and is induced to flow out of the separation means via outlet (44) by means such as a vacuum pump in communication with outlet tube (42). The ensuing reduced volume of carrier gas and particles enters the chamber (24) where, again, the carrier gas may slow down and drop particulate matter. Also in chamber (24) the pellets impact the baffle means. The impact of the pellets on the baffle means will cause the baffle means to deform or flex and absorb energy from the pellets. Thereafter, the pellets flow in the direction of arrow C into the hopper (28). The remaining kinetic energy possessed by the pellets when they enter hopper (28) causes the pellets to roll around the outside surface of hopper (28). This rolling round the outside surface of hopper (28) will cause the transfer of kinetic energy from the pellets to the hopper and allow the pellets to move, under the influence of gravity, toward mouth (38) of the hopper (28). Assuming that the kinetic energy absorption means that the pellets have passed through are appropriate for the particular pellets, the kinetic energy possessed by the pellets when they pass into the hopper should be insufficient to cause an impact in the hopper that will damage the pellets.

Adjustment of the kinetic energy being absorbed by the apparatus whilst a particulate material is flowing through the apparatus may be achieved by adjustment of the disposition of the major axis of tube (14) relative to the horizontal. An operator may view the pellets entering the hopper (28) via the viewing window (32) and cause fine adjustment to the kinetic energy of the pellets as they enter the hopper. If the amount of strips in the baffle means (22) remains constant, experience will allow an operator to calibrate the disposition of the major axis of the tube (14) relative to horizontal by the mass of the pellets being conveyed through the apparatus and/or the size of the pellets. This may be done by attaching a plumb line (or the like) and a graduated scale to the tube (14).

## Claims

1. Particulate material handling apparatus which includes separation means for separating conveyed particulate from a conveying gas, at least one energy reducing means for reducing kinetic energy of the material and a loading hopper, in which the means are arranged such that, in use, material passes through the separation means, the energy reducing means and into the loading hopper.

2. Apparatus according to claim 1, wherein the separation means includes a first chamber having an inlet port (the first chamber is preferably of greater cross-sectional area than the inlet port) arranged to receive the conveying gas and particulate, and first and second outlet ports, in which particulate may exit the first chamber via the first outlet port and the conveying gas is exhausted via the second outlet port (preferably by way of a pressure means which causes the second outlet port to be at a reduced pressure relative to the first chamber).

3. Apparatus according to claim 1 or 2, wherein the energy reducing means includes a second chamber having an inlet port and an outlet port having arranged there between at least one flexible baffle (which is preferably of a flexible material and/or is energy absorbing) arranged such that material impacts upon the baffle when passing from the inlet port to the outlet port.

4. Apparatus according to claim 3, wherein the baffle includes plastics material, or natural or artificial rubber, and/or
includes a plurality of strips which preferably have a first end attached (preferably releasably attached) to an internal surface of the second chamber, and a second end being substantially free.

5. Apparatus according to claim 3 or 4, wherein the second chamber is a pipe or ducting, preferably having at least one slot arranged therein.

6. Apparatus according to claim 5, wherein the slots have baffles connected therethrough, or are blocked with a blocking peg.

7. Apparatus according to any preceding claim, wherein the energy reduction means includes an inlet pipe or duct having a flexible (preferably hinged) portion, which is preferably provided with support means (such as a threaded rod connected to support frame), to allow the disposition of the major axis of the pipe or duct between the separation means and the hinged flexible pipe or duct section to be adjusted with respect to the horizontal.

8. Apparatus according to claim 7, wherein the pipe between the separation means and the flexible portion is of steel, and/or
the pipe has an internal surface which is coated with an energy absorbing material (such as natural or artificial rubber), the internal surface preferably being smooth or is contoured to alter the energy absorbing characteristics of the surface.

9. Apparatus according to claim 7 or 8, wherein the separation means and the flexible portion have a distance therebetween which is variable.

10. Apparatus according to any preceding claim wherein the hopper is shaped or dimensioned such that particulate material entering the hopper first impacts a wall of the hopper at an acute angle to the surface of the hopper, and/or
the hopper has an inner surface (which may be smooth or contoured) of energy absorbing material, and/or
the hopper is substantially circular in horizontal cross-section (when in use) and the pellets are preferably introduced into the hopper substantially tangentially (at the point of introduction) to the inner surface of the hopper, and/or
the hopper has an internal shape which is substantially conical with the cone narrowing towards the bottom (which typically has an outlet port) of the hopper when in use.

11. Apparatus according to claim 10, wherein the hopper is further provided with a cylindrical section, one end of which mouths onto and engages with the widest portion of the conical section and the other end of which is closed.

12. Apparatus according to any preceding claim, wherein the hopper is provided with a mounting flange adapted to engage with a manway on a reactor vessel or a drum for conveying the particulate material.

13. A method of transferring kinetic energy from particulate material which method includes permitting said particulate material to pass through the apparatus according to any of claims 1 to 12.

14. Kinetic energy reduction apparatus for reducing kinetic energy of particulate material which apparatus includes a chamber having an inlet port and an outlet port having arranged therebetween at least one flexible baffle arranged such that the material impacts upon the baffle when passing from the inlet port to the outlet port.

15. Kinetic energy reduction apparatus for reducing kinetic energy of particulate material which apparatus includes an inlet pipe or duct support means arranged to support a pipe or duct having a flexible portion.

16. Apparatus for separating conveyed particulate material from a conveying gas, which apparatus includes a first chamber having an inlet port arranged to receive the conveyed gas and particulate material and first and second outlet ports, in which particulate may exit the first chamber via the first outlet port and the conveying gas is exhausted via the second outlet port.
